(19) **Europäisches Patentamt**

**European Patent Office**

**Office européen des brevets**

(11) **EP 1 669 325 A1**

(12) **EUROPÄISCHE PATENTANMELDUNG**

(43) Veröffentlichungstag:
**14.06.2006 Patentblatt 2006/24**

(51) Int Cl.:
*C01G 25/00* (2006.01)     *C04B 35/491* (2006.01)

(21) Anmeldenummer: **04029439.9**

(22) Anmeldetag: **13.12.2004**

(84) Benannte Vertragsstaaten:
**AT BE BG CH CY CZ DE DK EE ES FI FR GB GR HU IE IS IT LI LT LU MC NL PL PT RO SE SI SK TR**
Benannte Erstreckungsstaaten:
**AL BA HR LV MK YU**

(71) Anmelder: **Kerr-McGee Pigments GmbH**
**47829 Krefeld (DE)**

(72) Erfinder:
• **Auer, Gerhard**
  **47800 Krefeld (DE)**
• **Günnel, Horst**
  **47906 Kempen (DE)**

(74) Vertreter: **HOFFMANN EITLE**
**Patent- und Rechtsanwälte**
**Arabellastrasse 4**
**81925 München (DE)**

(54) **Feinteilige Bleizirkonattitanate und Zirkoniumtitanate und Verfahren zu deren Herstellung unter Verwendung von Titanoxidhydratpartikeln**

(57)     Die Erfindung betrifft feinteilige Zirkoniumtitanate bzw. Bleizirkonattitanate sowie ein Verfahren zu deren Herstellung durch Umsetzung von Titandioxidpartikeln mit einer Zirkoniumverbindung bzw. einer Blei- und Zirkoniumverbindungen Titandioxidpartikeln. Die Titandioxidpartikel weisen eine BET-Oberfläche von mehr als 50 $m^2$/g auf. Die Bleizirkonattitanate können zur Herstellung mikroelektronischer Bauteile verwendet werden.

## Beschreibung

Die Erfindung betrifft feinteilige Bleizirkonattitanate (PZT) und Zirkoniumtitanate als Vorstufen für Bleizirkonattitanate, ein Verfahren zu deren Herstellung durch Umsetzung von Titandioxidpartikeln mit einer Zirkoniumverbindung bzw. einer Blei- und Zirkoniumverbindung. Weiterhin betrifft die Erfindung ein mikroelektronisches Bauelement, welches ein Bleizirkonattitanat enthält.

## Stand der Technik:

Bleizirkonattitanat (PZT) hat piezoelektrische Eigenschaften. PZT-Keramiken werden deshalb vielfach in elektromechanischen Bauteilen eingesetzt, beispielsweise in sogenannten Aktuatoren zur Messung oder Registrierung von mechanischen Kräften oder als Aktuator zur Erzeugung von mechanischen Wirkungen durch elektrische Ansteuerung.
Dem PZT-Keramikmaterial liegen Bleioxid, Zirkoniumdioxid und Titandioxid zugrunde. Für gängige PZT-Keramikmaterialen lässt sich die Zusammensetzung formelmäßig beispielsweise als $Pb(Zr_xTi_{1-x})O_3$ mit $0<x<1$ angeben. Weiterhin sind üblicherweise untergeordnete Mengen an Dotierelementen enthalten. Typische Dotierelemente sind Strontium, Zink und Niob.
Ausgangsmaterial für derartige PZT-Keramiken sind Mischoxidpulver, die zu Formkörpern verpresst oder zu Beschichtungen verarbeitet und dann zu Keramik gesintert werden. Bleizirkonattitanat-Mischoxidpulver können durch Synthesemethoden, die über Festkörperreaktionen (Mischoxid-Verfahren) ablaufen, und durch nasschemische Methoden (z.B.
Sol-Gel-Prozess, Kopräzipitationsverfahren oder Sprühreaktionsverfahren) hergestellt werden.
Die Sinterfähigkeit bzw. Sintertemperatur der Pulver ist nicht nur abhängig von der Zusammensetzung, sondern auch von der Vorgeschichte des jeweiligen Materials, also vom Aktivierungsgrad und von der Partikelgröße, der Partikelgrößenverteilung, der Partikelform und der Materialdichte der Oxidpulver.
Nach den herkömmlichen Verfahren hergestellte PZT-Pulver erfordern hohe Reaktionstemperaturen für die Umsetzung der Ausgangsmaterialien und ebenfalls hohe Sintertemperaturen für die Ausbildung der fertigen Keramik und häufig lange Sinterzeiten, um einigermaßen phasenreine PZT-Keramiken zu erhalten.
Die Reaktionstemperaturen liegen bei Verwendung oxidischer Reaktanden bei etwa 900°C, bei Verwendung von Reaktanden, welche nach dem Sol-Gel-Verfahren hergestellt werden im Bereich von 450 bis 700°C. Die entsprechenden Sintertemperaturen betragen etwa 1300°C (oxidische Reaktanden) bzw. 1000°C (Reaktanden aus Sol-Gel-Verfahren). Bei Temperaturen von deutlich über 1000°C verdampfen jedoch merkliche Mengen an Bleioxid, weshalb Vorkehrungen zur Vermeidung von Bleiverlusten und damit der Störung der Stöchiometrie getroffen werden müssen. Des weiteren verwendet man als Elektrodenmaterial piezoelektrischer Keramiken, wie z.B. Vielschicht-Piezoaktoren, üblicherweise Ag/Pd (70/30), so dass die Sintertemperatur durch den Schmelzpunkt dieser Legierung begrenzt ist. Hohe Sintertemperaturen erfordern daher einen entsprechend höheren Anteil des höherschmelzenden, aber kostenintensiveren Palladiums.
Die Vielschicht-Piezoaktoren bestehen aus stapelweise angeordneten Piezoelementen mit einer Dicke von jeweils 20 bis 200 $\mu$m. Diese Vielschicht-Piezoaktoren weisen idealerweise hohe Curie- und Anwendungstemperaturen, gute piezoelektrische Eigenschaften und eine hohe Verbundfestigkeit auf.

## Zusammenfassung der Erfindung:

Der vorliegenden Erfindung liegt die Aufgabe zu Grunde, feinteilige, sinteraktive und wirtschaftlich herstellbare Bleizirkonattitanate sowie Zirkoniumtitanate als Vorstufen für Bleizirkonattitanate, welche bei niedrigen Sintertemperaturen zur PZT-Keramik versintern sowie ein Verfahren zu deren Herstellung unter Verwendung einfacher titanhaltiger Substrate bereitzustellen.
Die Aufgabe wird erfindungsgemäß zum einen gelöst durch Verfahren zur Herstellung von Zirkoniumtitanaten bzw. Bleizirkonattitanaten durch Umsetzung von Titandioxidpartikeln mit einer BET-Oberfläche von mehr als 50 $m^2$/g mit einer Zirkoniumverbindung bzw. einer Blei- und Zirkoniumverbindung.
Die Aufgabe wird ferner gelöst durch die Bereitstellung von Zirkoniumtitanaten und Bleizirkonattitanaten, welche durch die erfindungsgemäßen Verfahren herstellbar sind.
Die Erfindung umfasst zudem die Bereitstellung eines mikroelektronischen Bauelementes, insbesondere eines Vielschicht-Piezoaktors, hergestellt mit Hilfe eines erfindungsgemäßen Bleizirkonattitanat-Materials.

**Genaue Beschreibung der Erfindung:**

Die Titandioxidpartikel

Die erfindungsgemäß verwendeten Titandioxidpartikel weisen eine BET-Oberfläche von mehr als 50 $m^2$/g, vorzugsweise weniger als 450 $m^2$/g, besonders bevorzugt 200 bis 380 $m^2$/g, insbesondere bevorzugt 250 bis 350 $m^2$/g, auf. Die Bestimmung der BET-Oberfläche erfolgt dabei nach DIN ISO 9277 mittels $N_2$ bei 77 K an einer bei 140 °C während 1 Stunde entgasten und getrockneten Probe aus den Titandioxidpartikeln. Die Auswertung erfolgt über Mehrpunktbestimmung (10-Punkt-Bestimmung).

Die erfindungsgemäß verwendeten Titandioxidpartikel sind regelmäßig Titanoxidhydratpartikel, d.h. die Partikel enthalten chemisorbiertes Wasser und gegebenenfalls $SO_4$ und/oder weitere anorganische und/oder organische Bestandteile.

Vorzugsweise enthalten die Titandioxidpartikel 0,4 bis 25 Gew.-%, besonders bevorzugt 2 bis 10 Gew.-%, Wasser.

Der $SO_4$-Gehalt der Titandioxidpartikel beträgt vorzugsweise weniger als 1 Gew.-%, besonders bevorzugt zwischen 0,01 bis 0,4 Gew.-%, insbesondere bevorzugt zwischen 0,01 bis 0,08 Gew.-%, bezogen auf $TiO_2$.

Die angegebenen und alle nachfolgend aufgeführten Gewichtsprozentangaben der Inhaltsstoffe des Titandioxids beziehen sich auf eine nach ISO 787 Teil 2 getrocknete Probe.

Die Bestimmung des $H_2O$-Gehalts der Titandioxidpartikel kann nach folgender Gleichung erfolgen:

$$H_2O\text{-Gehalt (\%)} = \text{Glühverlust (\%)} - H_2SO_4\text{-Gehalt (\%)}$$

Hierbei ist der Glühverlust der Gewichtsverlust einer nach ISO 787 Teil 2 getrockneten Probe nach einstündigem Glühen bei einer Temperatur von 1000°C. Der $SO_4$-Gehalt wird auf Grundlage der analytischen Bestimmung des Schwefelgehalts der nach ISO 787 Teil 2 getrockneten Probe ermittelt.

Die Bestimmung des Schwefelgehalts erfolgt durch Verbrennung und gaschromatographische Detektion der Verbrennungsgase mittels Wärmeleitfähigkeitsdetektion (WLD).

Näherungsweise kann der $H_2O$-Gehalt der Titandioxidpartikel auch mit dem Glühverlust nach einstündigem Glühen der nach ISO 787 Teil 2 getrockneten Probe bei 500°C gleichgesetzt werden.

Eine exakte Bestimmung des $H_2O$-Gehalts der Titandioxidpartikel kann beispielsweise durch gaschromatographische Analyse der flüchtigen Bestandteile erfolgen, welche nach einstündigem Glühen bei einer Temperatur von 1000°C einer nach ISO 787 Teil 2 getrockneten Probe entstehen.

Der Halogenidgehalt der erfindungsgemäß verwendeten Titandioxidpartikel beträgt vorzugsweise weniger als 1000 ppm, besonders bevorzugt weniger als 500 ppm, insbesondere bevorzugt weniger als 50 ppm, bezogen auf $TiO_2$. Insbesondere beträgt der Chloridgehalt der Partikel vorzugsweise weniger als 200 ppm, insbesondere weniger als 100 ppm, besonders bevorzugt weniger als 20 ppm, bezogen auf $TiO_2$.

Der Gehalt an Niob der Titandioxidpartikel kann 10 bis 2000 ppm, vorzugsweise 30 bis 500 ppm, insbesondere 50 bis 300 ppm, bezogen auf $TiO_2$, betragen.

Der Gehalt an Natrium und/oder Kalium der erfindungsgemäß verwendeten Titandioxidpartikel beträgt vorzugsweise weniger als 200 ppm, bezogen auf $TiO_2$.

Der Gehalt an Eisen der erfindungsgemäß verwendeten Titandioxidpartikel beträgt vorzugsweise weniger als 100 ppm, besonders bevorzugt weniger als 10 ppm, bezogen auf $TiO_2$.

Die erfindungsgemäß verwendeten Titanoxidhydratpartikel können durch Hydrolyse anorganischer oder organischer Titanverbindungen erhalten werden. Je nach Titanverbindung und Reaktionsbedingungen ergeben sich dabei unterschiedliche Eigenschaften der erhaltenen Titandioxide.

Durch Hydrolyse von Titanylsulfatlösung lassen sich die erfindungsgemäß verwendeten Titanoxidhydratpartikel in guter Qualität und kostengünstig herstellen. Die Titanoxidhydratpartikel können jedoch auch aus Titantetrachlorid oder Titanalkoxid hergestellt werden.

Bei Titanoxidhydrat, welches durch Hydrolyse von Titanylsulfatlösung erhalten wird, liegt eine besonders vorteilhafte Kombination von Eigenschaften vor, nämlich eine hohe spezifische Oberfläche und eine mikrokristalline Anatasstruktur. Diese Anatasstruktur kann aufgrund der breiten Reflexe des Röntgendiffraktogramms (s. Abb. 1) als mikrokristallines Material identifiziert werden.

Vorzugsweise enthalten die erfindungsgemäß verwendeten Partikel daher weniger als 10 Gew.-%, besonders bevorzugt weniger als 1 Gew.-%, Rutil, bezogen auf $TiO_2$. Besonders bevorzugt sind Titandioxidpartikel, die im Röntgendiffraktogramm deutlich eine Anatas-Struktur zeigen.

Die Titanoxidhydratpartikel können beispielsweise durch Hydrolyse einer schwefelsäurehaltigen Titanylsulfatlösung erhalten werden. Je nach Herkunft und Zusammensetzung der schwefelsäurehaltigen Titanylsulfatlösung wird bei der Hydrolyse eine schwefelsaure Suspension von Titanoxidhydrat erhalten, welche noch unerwünschte Verunreinigungen, insbesondere Schwermetalle, enthalten kann. In der Regel werden deshalb ein oder mehrere Reinigungsschritte vorgenommen, um das Titanoxidhydrat von unerwünschten Verunreinigungen zu befreien.

Bevorzugt werden Titanoxidhydratpartikel verwendet, die durch Hydrolyse von Titanylsulfat entstehen, welches beim Herstellungsverfahren für Titandioxid nach dem Sulfatverfahren anfällt. Dieses Verfahren wird beispielsweise in Industrial Inorganic Pigments 3. Edition, Editors Gunter Buxbaum, Gerhard Pfaff, Wiley-VCH, 2005, beschrieben.

Besonders bevorzugt wird dabei das nach der Hydrolyse erhaltene Titanoxidhydrat von anhaftenden Verunreinigungen befreit, indem es filtriert und gewaschen und gegebenenfalls noch zusätzlich dem Verfahrensschritt der so genannten Bleiche, einer chemischen Behandlung mit Reduktionsmitteln zur Eliminierung von 3-wertigem Eisen, unterzogen wird.

Die großtechnische Herstellung von Titanoxidhydrat auf Grundlage des Sulfatverfahrens für die Titandioxidherstellung hat weiterhin den Vorteil einer konstanten Produktqualität und ständigen Verfügbarkeit.

Um eine besonders hohe Reinheit zu erhalten, ist es vorteilhaft, nicht die großtechnische metallionenhaltige schwefelsäurehaltige Titanylsulfatlösung zu verwenden, sondern eine synthetische schwefelsäurehaltige Titanylsulfatlösung, welche nur geringe Mengen an Verunreinigungen enthält. Eine solche Titanylsulfatlösung kann beispielsweise durch Hydrolyse von hochreinem $TiCl_4$ oder Titanestern und Lösen des erhaltenen Präzipitats mit Schwefelsäure hergestellt werden. Die Herstellung eines hochreinen Titanoxidhydrats daraus kann entweder analog zu herkömmlichen großtechnischen Prozessen oder mit spezifischen Abweichungen erfolgen.

Bevorzugt wird die anhaftende Schwefelsäure durch Umsetzung mit einer Base (z.B. NaOH, KOH, $NH_3$) und anschließendes Auswaschen des entstandenen Sulfats entfernt. Gegebenenfalls kann eine nachfolgende Eliminierung der durch die Umsetzung mit der Base eingebrachten Kationen durch Umsetzung mit thermisch leicht zersetzbaren Säuren (z.B. Carbonsäuren oder Salpetersäure) und anschließendes Auswaschen bewerkstelligt werden.

Je nach gewünschter Reinheit können die oben beschriebenen Umsetzungen mehrfach wiederholt werden.

Besonders vorteilhaft bei dem aus Titanylsulfat erhaltenen Titanoxidhydrat sind seine hohe Reinheit bezüglich Eisen und anderer Schwermetalle sowie seine extrem geringen Gehalte an Chlorid.

Es kann vorteilhaft sein, die Titandioxidpartikel durch einen Kalzinier- oder Temperschritt zu behandeln, um die Teilchengröße und Reaktivität gezielt zu modifizieren. Insbesondere kann die Umwandlung von mikrokristallinem Titanoxidhydrat in etwas größere Anatas-Kristallite vorteilhaft sein. Dabei sollte der Kalzinier- oder Temperschritt jedoch so durchgeführt werden, dass die besonderen Eigenschaften des Titanoxidhydrats nicht verloren gehen, d.h. der Anteil an chemisorbiertem Wasser (z.B. in Form von Hydroxylgruppen) sollte nicht kleiner als 0,4 Gew.-%, bevorzugt 2,0 Gew.-%, werden, um eine möglichst reaktive Oberfläche des Titanoxidhydrats beizubehalten.

Bei mit hohen Temperaturen kalziniertem Titanoxidhydrat geht die Reaktivität deutlich zurück, während sich das Titanoxidhydrat zu makrokristallinem $TiO_2$ mit einer Kristallgröße von größer als 100 nm in der Anatas- oder Rutilmodifikation mit einem Gehalt an chemisorbiertem Wasser von kleiner als 0,4 Gew.-% umwandelt. Außerdem wird - wie oben bereits erwähnt - durch gröbere titanhaltige Partikel die Ausbildung eines gröberen Zirkoniumtitanat bzw. Bleizirkonattitanats induziert.

Erfindungsgemäß werden bevorzugt Titanoxidhydratpartikel verwendet, die nach einstündigem Glühen einer nach ISO 787 Teil 2 vorgetrockneten Probe bei einer Temperatur von 1000 °C einen Glühverlust von mehr als 2 Gew.-%, bevorzugt mehr als 6 Gew.-% und/oder die nach einstündigem Glühen bei 500 °C einen Glühverlust von mehr als 0,8 Gew.-%, bevorzugt mehr als 1,2 Gew.-%, aufweisen.

Durch die beschriebenen erfindungsgemäßen Verfahrensschritte, durch die im Vergleich zu herkömmlichen Gasphasenprozessen ein technisch und wirtschaftlich verbesserter Produktionsprozess zur Bildung nanopartikulärer titanoxidhydrathaltiger Materialien zur Verfügung gestellt wird, werden Primärpartikel des Titanoxidhydrats mit einer mittleren Teilchengröße von 3 bis 15 nm, bevorzugt 4 bis 8 nm, erhalten.

Die Primärpartikel sind kleine, näherungsweise kugelförmige, mikrokristalline Partikel mit einer gittergestörten Anatasstruktur. Die Teilchengröße kann durch Berechnung aus der BET-Oberfläche unter Annahme einer monomodalen Korngrößenverteilung von kugelförmigen Partikeln ermittelt werden. Die Beziehung zwischen der mittleren Teilchengröße d und der spezifischen Oberfläche $S_{BET}$ (ermittelt nach BET) ist unter der Voraussetzung einer monomodalen Korngrößenverteilung und kugelförmigen Partikeln durch die Gleichung

$$d_{Partikel} = \frac{6}{\rho \cdot S_{BET}}$$

mit $S_{BET}$ in $m^2/g$, $\rho$ = Dichte des Partikels in $g/cm^3$, d in $\mu m$ gegeben. Die verwendeten Dichten sind: 3,90 $g/cm^3$ (für $TiO_2$ als Titanoxidhydrat oder Anatas), 4,26 $g/cm^3$ (für $TiO_2$ als Rutil).

Es wurde überraschend gefunden, dass die erfindungsgemäß verwendeten Titandioxidpartikel bezüglich ihrer Eignung zur Herstellung von Zirkoniumtitanaten bzw. Bleizirkonattitanaten deutliche Vorteile gegenüber herkömmlichem Titandioxid, wie z.B. handelsübliche technische Titandioxide, aufweisen. So werden vermutlich aufgrund der hohen spezifischen Oberfläche, der geringen Partikelgröße von Titanoxidhydrat und der hohen Reaktivität bei der Umsetzung mit einer Zirkoniumverbindung bzw. einer Blei- und Zirkoniumverbindung besonders feinteilige und sinteraktive Zirkoniumtitanate bzw. Bleizirkonattitanate erhalten.

Durch die kristalline Struktur des Titanoxidhydrats wird ein kontrolliertes Kristallwachstum bei gleichzeitigem homogenen Einbau von Zirkonium und Blei erreicht.

Außerdem wirkt sich der geringe Chloridgehalt der erfindungsgemäßen Titanoxidhydratpartikel positiv auf die Eigenschaften der Zirkoniumtitanate bzw. Bleizirkonattitanate aus. Der geringe Gehalt an Chlorid und metallischen Spurenelementen wirkt sich günstig auf die piezoelektrischen Eigenschaften der aus Titanoxidhydrat hergestellten Zirkoniumtitanate bzw. Bleizirkonattitanate aus. Insbesondere bei niedrigen Umsetzungstemperaturen zu Zirkoniumtitanat bzw. Bleizirkonattitanat ist die Anwesenheit von Halogeniden störend.

Die Zirkonium- und Bleiverbindungen

Die Titandioxidpartikel werden erfindungsgemäß mit einer oder mehreren Zirkoniumverbindungen bzw. Blei- und Zirkoniumverbindungen umgesetzt. Hierbei handelt es sich in der Regel um Oxide oder Salze des Bleis bzw. Zirkoniums. Die Salze umfassen Acetate, Carbonate, Oxalate, Hydroxide, Oxidchloride, Oxidsulfate, Nitrate, Halogenide wie Chloride, wie auch organische Verbindungen wie Alkoxide und Salze von Carbonsäuren.

Besonders bevorzugt sind feinteilige oxidische oder wasserlösliche Zirkonium- und Bleiverbindungen. Als Zirkoniumverbindungen werden besonders bevorzugt Zirkoniumoxid ($ZrO_2$), Zirkonylchlorid ($ZrOCl_2$) und Zirkonylsulfat ($ZrOSO_4$) verwendet. Unter den Bleiverbindungen sind Bleioxid (PbO), Bleinitrat ($Pb(NO_3)_2$), Bleiacetat ($Pb(OAc)_2$) sowie andere leicht zersetzliche Bleiverbindungen bzw. Mischungen hiervon besonders bevorzugt.

Die Zersetzungstemperaturen können z.B. in kombinierten Thermogravimetrie (TG)- und Differenzthermoanalyse (DTA)-Apparaturen ermittelt werden.

Bei Verwendung von Zirkonium- bzw. Bleiverbindungen mit hoher Zersetzungstemperatur oder bei Verwendung eines grobteiligen Zirkondioxids wird der Vorteil der Feinteiligkeit der Titankomponente nicht optimal genutzt: Bei den zur Zersetzung der Zirkonium- bzw. Bleiverbindungen notwendigen Temperaturen hat bereits eine Versinterung und Vergröberung der Titankomponente stattgefunden. Dennoch kann auch bei Verwendung von erst bei hohen Temperaturen sich zersetzenden Zirkonium- bzw. Bleiverbindungen durch feinteilige Titankomponenten noch eine merkliche Verbesserung der Feinteiligkeit der Zirkoniumtitanate bzw. Bleizirkonattitanate erreicht werden

Zur Reaktionsführung

Die vorstehend charakterisierten Titandioxidhydratpartikel werden erfindungsgemäß in einem Verfahren zur Herstellung von Zirkoniumtitanaten bzw. Bleizirkonattitanaten mit den vorstehend genannten Zirkoniumverbindungen bzw. Blei- und Zirkoniumverbindungen verwendet.

Zur Herstellung von Zirkoniumtitanaten können die Titandioxidpartikel und Zirkoniumoxid gemeinsam trocken gemahlen und anschließend kalziniert oder teilkalziniert werden. Entsprechend können Bleizirkonattitanate durch gemeinsames Mahlen von Titandioxidpartikeln, Zirkoniumoxid und einer Bleiverbindung, z.B. Bleioxid, Bleinitrat oder Bleiacetat, hergestellt werden. Auch hier kann sich ggf. eine Kalzinierung oder Teilkalzinierung anschließen.

Alternativ können die Titandioxidpartikel auch mit einer wasserlöslichen Zirkoniumverbindung (z.B. Zirkonylchlorid oder Zirkonylsulfat) umgesetzt werden, wobei die Partikel in der bereits hergestellten Zr-haltigen Lösung oder zusammen mit dem Zr-Salz in Wasser suspendiert werden. Die Reaktion erfolgt durch die Neutralisation der Suspension, z.B. durch Zugabe von Ammoniak oder Natriumhydroxid, wobei die Zirkoniumverbindung in Form von oxidischen und/ oder hydroxidischen Verbindungen ausfällt. Nach der Abtrennung und Reinigung des Produkts durch Filtration und Waschen, wird das sulfatfarme Produkt getrocknet. An die Trocknung kann sich ggf. eine Kalzinierung oder Teilkalzinierung bei einer Temperatur von maximal 500 °C anschließen. Bevorzugt erfolgt die Kalzinierung oder Teilkalzinierung bei einer Temperatur unterhalb von 400 °C. Führt man die Reaktion in Gegenwart einer Bleiverbindung und/oder anderen Dotierungsverbindungen wie z.B. Niobverbindungen durch, so erhält man nach der Kalzinierung entsprechend dotiertes oder nicht-dotiertes Bleizirkonattitanat bzw. dotiertes Zirkoniumtitanat.

Die Herstellung der Bleizirkonattitanate kann aber auch zweistufig verlaufen, wobei in einer ersten Stufe die Zirkoniumtitanate auf eine der oben beschriebenen Wege hergestellt werden und diese dann in einer zweiten Stufe mit einer Bleiverbindung trocken gemahlen werden. Auch in diesem Fall kann sich ggf. eine Kalzinierung anschließen.

Das Zirkoniumtitanat bzw. Bleizirkonattitanat kann auch unter hydrothermalen Bedingungen direkt durch Umsetzung der Titandioxidpartikel mit einer Zirkoniumverbindung bzw. Blei- und Zirkoniumverbindung erhalten werden.

Die Kalzinierung der Titandioxidpartikel mit der Zirkoniumverbindung bzw. Blei- und Zirkoniumverbindung erfolgt vorzugsweise nicht isotherm, sondern bei näherungsweise konstanter Umwandlungsrate zum Zirkoniumtitanat bzw. Bleizirkonattitanat (SCRT-Methode, beschrieben für $BaTiO_3$ in Gotor et al., J.Europ.Cer.Soc.23 (2003), 505-513).

Im Anschluss an die Kalzinierung kann das Zirkoniumtitanat bzw. Bleizirkonattitanat durch Mahlen, z.B. Perlmahlung, weiter zerkleinert werden.

Die erfindungsgemäßen pulverförmigen Bleizirkonattitanate bzw. Zirkoniumtitanate sind feinteilig, reaktiv und weisen eine sehr homogene Verteilung der einzelnen Elemente auf.

Die Mengenverhältnisse Bleiverbindung / Zirkoniumverbindung /Titandioxidpartikel (und gegebenenfalls weiterer Dotierungselemente) werden durch exakte Einwaage eingestellt. Das molare Verhältnis Pb:Zr:Ti kann dabei entsprechend der konkreten Anwendungsanforderung des Bleizirkonattitanats bzw. Zirkoniumtitanats angepasst werden.

## Zubereitungen aus Titanoxidhydratpartikeln und Zirkoniumverbindungen bzw. Zirkonium- und Bleiverbindungen

Die Erfindung stellt auch Zubereitungen bereit, die Titanoxidhydratpartikel mit einer BET-Oberfläche von mehr als 50 $m^2$/g und eine aus einer wasserlöslichen Zirkoniumverbindung bzw. einer wasserlöslichen Blei- und Zirkoniumverbindung.

Bevorzugt liegen solche Zubereitungen in getrockneter Form vor.

Besonders bevorzugt wird eine wasserlösliche Zirkoniumverbindung bzw. eine wasserlösliche Blei- und Zirkoniumverbindung oder eine wässrige Lösung eines Zirkoniumsalzes bzw. eines Blei- und Zirkoniumsalzes zu einer wässrigen Suspension von Titanoxidhydrat gegeben und diese Suspension getrocknet. Dabei wird ein Titanoxidhydrat erhalten, auf dessen Oberfläche die Zirkoniumverbindung bzw. die Blei- und Zirkoniumverbindung gleichmäßig verteilt sind. Das so erhaltene und mit der Zirkoniumverbindung bzw. Blei- und Zirkoniumverbindung imprägnierte Titanoxidhydrat kann anschließend kalziniert werden.

Es ist auch möglich, die Trocknung und Kalzinierung in einem einzigen Verfahrensschritt durchzuführen.

Bei den Blei- bzw. Zirkoniumverbindungen handelt es sich bevorzugt um oxidische und/oder hydroxidische Verbindungen enthalten.

Enthält die Zubereitung Titanoxidhydratpartikel und eine Zirkoniumverbindung, so liegt das Molverhältnis von Titan und Zirkonium bevorzugt zwischen 0,75 und 0,90.

Bei Zubereitungen, die Titanoxidhydratpartikel sowie eine gefällte oder aufgefällte Zirkoniumverbindung und Bleiverbindung enthalten, beträgt das Molverhältnis [Zr]/[Ti] vorzugsweise 1,00 bis 1,50 und das Molverhältnis [Pb] / ([Zr] + [Ti]) vorzugsweise 0,95 bis 1,00.

Bei der Herstellung der erfindungsgemäßen Zubereitungen als Zwischenprodukte für das Zirkoniumtitanat bzw. Bleizirkonattitanat können gegebenenfalls Dotierungsverbindungen zugegeben werden.

Als Dotierungsverbindungen können z.B. Nd-, Sr-, La-, Nb-, Ni- oder Zn-Salze zugegeben werden.

## Das Zirkoniumtitanat bzw. Bleizirkonattitanat

Die Erfindung stellt Bleizirkonattitanate bzw. Zirkoniumtitanate als Vorstufen für Bleizirkonattitanate bereit, das gemäß dem erfindungsgemäßen Verfahren erhältlich ist.

Das erfindungsgemäße Bleizirkonattitanat lässt sich durch die Summenformel $Pb(Zr_xTi_{l-x})O_3$ mit 0<x<1, vorzugsweise 0,4<x<0,8 beschreiben. Kristallographisch liegen neben dem Bleizirkonattitanat auch Bleititanat ($PbTiO_3$) und Bleizirkonat ($PbZrO_3$) vor, die sich röntgendiffraktometrisch nachweisen lassen.

Der Chloridgehalt der Zirkoniumtitanate bzw. Bleizirkonattitanate beträgt vorzugsweise weniger als 100 ppm, besonders bevorzugt weniger als 10 ppm.

Der Niobgehalt der Zirkoniumtitanate bzw. Bleizirkonattitanate beträgt vorzugsweise 10 bis 300 ppm, besonders bevorzugt 15 bis 100 ppm.

Vorzugsweise enthalten die erfindungsgemäßen Zirkoniumtitanate bzw. Bleizirkonattitanate zudem weniger als 500 ppm, bevorzugt weniger als 200 ppm, Sulfat.

Vorzugsweise enthalten die erfindungsgemäßen Zirkoniumtitanate bzw. Bleizirkonattitanate weniger als 200 ppm Natrium oder Kalium.

Vorzugsweise enthalten die erfindungsgemäßen Zirkoniumtitanate bzw. Bleizirkonattitanate zudem weniger als 20 ppm Eisen, bevorzugt weniger als 5 ppm.

Die Phasenreinheit des erfindungsgemäßen Produktes kann mittels Pulverröntgendiffraktometrie (XRD) bestimmt werden.

## Mikroelektronische Bauelemente

Die erfindungsgemäßen Bleizirkonattitanate, können zur Herstellung eines mikroelektronischen Bauelements, z.B. eines Vielschicht-Piezoaktors, verwendet werden. Aufgrund der Feinteiligkeit der erhaltenen Bleizirkonattitanate können besonders dünne Schichten und deshalb besonders kleine Bauteilabmessungen realisiert werden. Insbesondere die Anwendung in keramischen Vielschicht-Piezoaktoren kommt in Betracht, wobei aufgrund der Feinteiligkeit der erfindungsgemäßen Bleizirkonattitanate besonders dünne Schichten (kleiner 100 $\mu$m, besonders bevorzugt kleiner als 20 $\mu$m) erhalten werden können. Außerdem ermöglicht die hohe Sinteraktivität bzw. niedrige Sintertemperatur der erfindungsgemäßen Bleizirkonattitanate die Verwendung von niedrigschmelzendem und kostengünstigen Elektrodenmaterial. So können z.B. Elektroden aus einer Ag/Pd Legierung mit einem höheren Ag-Anteil als üblich verwendet werden. Solche Bauelemente können beispielsweise hergestellt werden, indem man aus dem Bleizirkonattitanat ggf. zusammen mit organischen Additiven einen Schlicker herstellt und diesen mit verschiedenen Methoden (Spin-Coating, Dip-Coating, doctorblade-Methode) zu dünnen Filmen auszieht. Entsprechende Bauelemente können auch nach dem Versetzen des Bleizirkonattitanats mit einen Presshilfsmittel zu einem Grünkörper gepresst werden, der anschließend gesintert wird. Es ist auch möglich, die erfindungsgemäßen feinteiligen Bleizirkonattitanate in Mischung mit herkömmlichen gröberen Bleizirkonattitanaten zu verwenden. Auf diese Weise lässt sich die Struktur der entstehenden Keramik gezielt beeinflussen. So kann eine gezielte Mischung aus kleinen und großen kristallinen Bereichen mit einem spezifischen Eigenschaftsprofil ermöglicht werden.

Es kann beispielsweise auch die Sinteraktivität durch den Zusatz des feinteiligen Materials zum herkömmlichen Material gesteigert werden, ohne dass die kristallinen Bereiche der resultierenden Keramik insgesamt zu feinteilig werden.

**Beispiele**

Die Erfindung wird im Folgenden anhand einiger ausgewählter Beispiele näher erläutert, wobei die Erfindung keineswegs auf diese Beispiele beschränkt ist.

Beispiel 1:

Zu einer wässrigen Suspension von Titanoxidhydrat (9 Gew.-% flüchtige Bestandteile, Anatas, BET: 271 $m^2$/g, entspricht einer Kristallitgröße von 6 nm; analytische Angaben bezogen auf $TiO_2$: 700 ppm S, <20 ppm Cl, 310 ppm Nb, 10 ppm Fe) wird eine wässrige Bleiacetatlösung und anschließend eine wässrige Zirkonylsulfatlösung gegeben. Die Mengenverhältnisse der Reaktanden werden so gewählt, dass die daraus hergestellten Bleizirkonattitanate eine Zusammensetzung entsprechend der Formel $Pb_{0,98}(Zr_{0,54}Ti_{0,46})O_3$ aufweisen.

Durch Zugabe von Ammoniak bis zu einem pH-Wert von 7,0 werden die gelösten Verbindungen auf die Titanoxidhydratpartikel aufgefällt. Die Suspension wird filtriert, gewaschen und der erhaltene Filterkuchen getrocknet.

Beispiel 2:

Das aus Beispiel 1 erhaltene Material wird 30 Minuten bei einer Temperatur von 500°C kalziniert.
Im Röntgendiffraktogramm werden $PbTiO_3$ und $PbZrO_3$ nachgewiesen; die vor der Kalzinierung vorhandenen Anatas-Reflexe sind vollständig verschwunden.

Beispiel 3:

Pulverförmiges Titanoxidhydrat(Zusammensetzung wie in Beispiel 1) wird mit feinteiligem Zirkonoxid und Bleioxid gemischt und aufgemahlen. Die Mengenverhältnisse der Reaktanden werden so gewählt, dass die daraus herstellbaren Bleizirkonattitanate eine Zusammensetzung entsprechend der Formel $Pb_{0,98}(Zr_{0,54}Ti_{0,46})O_3$ aufweisen.

Das erhaltene Pulvergemisch setzt sich bei niedrigeren Temperaturen zum Bleizirkonattitanat um als ein analog hergestelltes Pulvergemisch, bei dem anstelle des Titanoxidhydrat eine Titandioxidkomponente mit einer Teilchengröße von 200 nm verwendet wurde.

Beispiel 4 (Vergleichsbeispiel):

Zu einer wässrigen Suspension von Titandioxid in der Rutilmodifikation mit einer Teilchengröße von 200 nm und einer BET-Oberfläche von 6 $m^2$/g wird eine wässrige Bleiacetatlösung und anschließend eine wässrige Zirkonylsulfatlösung gegeben. Die Mengenverhältnisse der Reaktanden werden so gewählt, dass die daraus hergestellten Bleizirkontitanate eine Zusammensetzung entsprechend der Formel $Pb_{0,98}(Zr_{0,54}Ti_{0,46})O_3$ aufweisen.
Durch Zugabe von Ammoniak bis zu einem pH-Wert von 7,0 werden die gelösten Verbindungen auf die Titandioxid aufgefällt. Die Suspension wird filtriert, gewaschen und der erhaltene Filterkuchen getrocknet.
Das so erhaltene Material wird 30 Minuten bei einer Temperatur von 500°C kalziniert.

Das Titandioxid hat sich bei dieser Temperatur nur teilweise umgesetzt; im Röntgendiffraktogramm werden neben verschiedenen anderen Phasen noch deutliche Anteile an Rutil nachgewiesen.

**Patentansprüche**

1. Verfahren zur Herstellung von Zirkoniumtitanaten, wobei Zirkoniumverbindungen mit Titandioxidpartikeln mit einer BET-Oberfläche von mehr als 50 m$^2$/g umgesetzt werden.

2. Verfahren zur Herstellung von Bleizirkonattitanaten, wobei Blei- und Zirkoniumverbindungen mit Titandioxidpartikeln mit einer BET-Oberfläche von mehr als 50 m$^2$/g umgesetzt werden.

3. Verfahren nach einem der Ansprüche 1 oder 2, **dadurch gekennzeichnet, dass** die Titandioxidpartikel weniger als 1000 ppm Halogenide, bezogen auf $TiO_2$, enthalten.

4. Verfahren nach einem der vorhergehenden Ansprüche, **dadurch gekennzeichnet, dass** die Titandioxidpartikel in der Anatas-Kristallstruktur vorliegen.

5. Verfahren nach einem der vorhergehenden Ansprüche, **dadurch gekennzeichnet, dass** die Titandioxidpartikel weniger als 100 ppm Chlorid, bezogen auf $TiO_2$ enthalten.

6. Verfahren nach einem der vorhergehenden Ansprüche, **dadurch gekennzeichnet, dass** die BET-Oberfläche der Titandioxidpartikel 200 bis 380 m$^2$/g beträgt.

7. Verfahren nach einem der vorhergehenden Ansprüche, **dadurch gekennzeichnet, dass** die Titandioxidpartikel weniger als 200 ppm Natrium und weniger als 200 ppm Kalium, bezogen auf $TiO_2$, enthalten.

8. Verfahren nach einem der vorhergehenden Ansprüche, **dadurch gekennzeichnet, dass** die Titandioxidpartikel Titanoxidhydratpartikel mit einem $H_2O$-Gehalt von 0,4 bis 25 Gew.-% sind.

9. Verfahren nach Anspruch 8, **dadurch gekennzeichnet, dass** die Titanoxidhydratpartikel einen $H_2O$-Gehalt von 2 bis 10 Gew.-%, bezogen auf $TiO_2$, aufweisen.

10. Verfahren nach einem der vorhergehenden Ansprüche, **dadurch gekennzeichnet, dass** die Titandioxidpartikel einen Sulfat-Gehalt von weniger als 1 Gew.-%, bezogen auf $TiO_2$ aufweisen.

11. Verfahren nach einem der vorhergehenden Ansprüche, **dadurch gekennzeichnet, dass** die Titandioxidpartikel, bezogen auf $TiO_2$, 10 bis 2000 ppm Niob enthalten.

12. Verfahren nach einem der vorhergehenden Ansprüche, **dadurch gekennzeichnet, dass** die Titandioxidpartikel weniger als 10 ppm Eisen, bezogen auf $TiO_2$ enthalten.

13. Verfahren nach einem der vorhergehenden Ansprüche, **dadurch gekennzeichnet, dass** die Titandioxidpartikel durch Hydrolyse von Titanylsulfat erhältlich sind.

14. Verfahren nach einem der Ansprüche 1 oder 3 bis 13, **dadurch gekennzeichnet, dass** die Umsetzung der Titandioxidpartikel mit Zirkoniumoxid durch gemeinsames Mahlen und anschließende Kalzinierung erfolgt.

15. Verfahren nach einem der Ansprüche 2 oder 3 bis 13, **dadurch gekennzeichnet, dass** die Umsetzung der Titandioxidpartikel mit Zirkoniumoxid und einer Bleiverbindung durch gemeinsames Mahlen erfolgt.

16. Verfahren nach einem der Ansprüche 1 oder 3 bis 13, **dadurch gekennzeichnet, dass** die Titandioxidpartikel in Suspension mit einer wasserlöslichen Zirkoniumverbindung umgesetzt werden, wobei die gelöste Zirkoniumverbindung durch Zugabe alkalischer Verbindungen neutralisiert und ausgefällt wird, die erhaltene Mischung durch Filtration abgetrennt und gegebenenfalls anschließend gewaschen und getrocknet wird, so dass ein pulverförmiges Material bestehend aus Titandioxid und ausgefälltem Zirkoniumoxid und/oder -hydroxid vorliegt.

17. Verfahren nach einem der Ansprüche 2 oder 3 bis 13, **dadurch gekennzeichnet, dass** die Titandioxidpartikel in Suspension mit einer wasserlöslichen Zirkoniumverbindung und einer wasserlöslichen Bleiverbindung umgesetzt werden, wobei die gelöste Zirkonium- und Bleiverbindung durch Zugabe alkalischer Verbindungen neutralisiert und ausgefällt werden, die erhaltene Mischung durch Filtration abgetrennt und gegebenenfalls anschließend gewaschen und getrocknet wird, so dass ein pulverförmiges Material bestehend aus Titandioxid und ausgefällten Oxiden und/oder Hydroxiden des Zirkoniums und des Bleis vorliegt.

18. Verfahren nach einem der Ansprüche 16 oder 17, **dadurch gekennzeichnet, dass** nach der Trocknung eine Kalzinierung oder Teilkalzinierung einer Temperatur von maximal 500 °C, bevorzugt unterhalb von 400°C, erfolgt.

19. Verfahren nach Anspruch 18, **dadurch gekennzeichnet, dass** die Kalzinierung nicht isotherm, sondern bei näherungsweise konstanter Umwandlungsrate zum nicht-dotiertem oder dotiertem Zirkoniumtitanat bzw. Bleizirkonattitanat erfolgt.

20. Verfahren nach einem der Ansprüche 16 bis 19, **dadurch gekennzeichnet, dass** die wasserlösliche Zirkoniumverbindung Zirkonylchlorid oder Zirkonylsulfat ist.

21. Verfahren nach einem der Ansprüche 16 bis 20, **dadurch gekennzeichnet, dass** die Suspension oder Lösung eine oder mehrere weitere Dotierungsverbindungen enthält.

22. Zubereitung, enthaltend Titanoxidhydratpartikel mit einer BET-Oberfläche von mehr als 50 $m^2/g$ und eine Zirkoniumverbindung, wobei das Molverhältnis von Titan und Zirkonium zwischen 0,75 und 0,90 liegt.

23. Zubereitung nach Anspruch 22, wobei die wasserlösliche Zirkoniumverbindung auf den Titanoxidhydratpartikeln abgeschieden und die Mischung anschließend getrocknet wurde.

24. Zubereitung, enthaltend Titanoxidhydratpartikel mit einer BET-Oberfläche von mehr als 50 $m^2/g$, sowie eine gefällte oder aufgefällte Zirkoniumverbindung und Bleiverbindung wobei das Molverhältnis von Pb, Zr und Ti so beschaffen ist, dass [Zr]/[Ti] = 1,00 bis 1,50 und [Pb]/([Zr]+[Ti]) = 0,95 bis 1,00 beträgt .

25. Zubereitung nach Anspruch 24, wobei die wasserlösliche Blei- und Zirkoniumverbindung auf den Titanoxidhydratpartikeln abgeschieden wurden und die Mischung anschließend getrocknet wurde.

26. Zirkoniumtitanat, welches durch ein Verfahren nach einem oder mehreren der Ansprüche 1, 3 bis 14, 16 oder 18 bis 21 herstellbar ist.

27. Zirkoniumtitanat nach Anspruch 26, **dadurch gekennzeichnet, dass** es einen Chloridgehalt von weniger als 100 ppm, bevorzugt weniger als 10 ppm, und einen Niob-Gehalt von 10 bis 300 ppm, bevorzugt von 15 bis 100 ppm aufweist.

28. Bleizirkonattitanat, welches durch ein Verfahren nach einem oder mehreren der Ansprüche 2, 3 bis 13, 15, 17 oder 18 bis 21 herstellbar ist.

29. Bleizirkonattitanat nach Anspruch 28, **dadurch gekennzeichnet, dass** einen Chloridgehalt von weniger als 100 ppm, bevorzugt weniger als 10 ppm, und einen Niob-Gehalt von 10 bis 300 ppm, bevorzugt von 15 bis 100 ppm aufweist.

30. Verwendung eines Bleizirkonattitanats nach einem oder mehreren der Ansprüche 28 oder 29 zur Herstellung eines mikroelektronischen Bauelements.

31. Verfahren zur Herstellung eines mikroelektronischen Bauelements, wobei ein Bleizirkonattitanat nach einem der Ansprüche 28 oder 29 gemahlen und dann zu einem Grünkörper gepresst wird, der anschließend gesintert wird.

32. Mikroelektronisches Bauelement umfassend ein Bleizirkonattitanat nach einem oder mehreren der Ansprüche 28 oder 29.

33. Mikroelektronisches Bauelement nach Anspruch 32, wobei das Bleizirkonattitanat in Form einer Schicht mit einer Dicke von weniger als 100 $\mu$m, bevorzugt weniger als 20 $\mu$m, vorliegt.

**Europäisches**
**Patentamt**

**EUROPÄISCHER RECHERCHENBERICHT**

Nummer der Anmeldung

EP 04 02 9439

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| X | WO 02/062724 A (MURATA MANUFACTURING CO., LTD; NADA, KENICHI; OKADA, KAZUNARI; KIDA, M) 15. August 2002 (2002-08-15)<br>* Seite 9, Zeile 12 - Seite 10, Zeile 8; Tabelle 1 *<br>* Seite 11, Zeile 7 - Zeile 15 * | 2,22,26, 30-33 | C01G25/00<br>C04B35/491 |
| Y | * Seite 12, Zeile 1 - Zeile 22; Beispiel 3 * | 1 | |
| Y | PATENT ABSTRACTS OF JAPAN<br>Bd. 013, Nr. 182 (C-591),<br>27. April 1989 (1989-04-27)<br>& JP 01 009819 A (NATL INST FOR RES IN INORG MATER; others: 02),<br>13. Januar 1989 (1989-01-13)<br>* das ganze Dokument * | 1 | |
| X | DATABASE CA [Online]<br>CHEMICAL ABSTRACTS SERVICE, COLUMBUS, OHIO, US;<br>SHIRASAKI, SHINICHI ET AL: "Manufacture of modified zirconium powder for dielectric ceramic"<br>XP002336905<br>gefunden im STN<br>Database accession no. 110:224087<br>* das ganze Dokument *<br>& JP 01 009818 A2 (NATIONAL INSTITUTE FOR RESEARCH IN INORGANIC MATERIALS, JAPAN; RESEARC) 13. Januar 1989 (1989-01-13) | 26 | |
| X | PATENT ABSTRACTS OF JAPAN<br>Bd. 018, Nr. 456 (C-1242),<br>25. August 1994 (1994-08-25)<br>& JP 06 144835 A (OSAKA CEMENT CO LTD),<br>24. Mai 1994 (1994-05-24)<br>* das ganze Dokument * | 1 | **RECHERCHIERTE SACHGEBIETE (Int.Cl.7)**<br>C01G<br>C04B |

Der vorliegende Recherchenbericht wurde für alle Patentansprüche erstellt

| Recherchenort | Abschlußdatum der Recherche | Prüfer |
|---|---|---|
| Den Haag | 20. Juli 2005 | Siebel, E |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

EPO FORM 1503 03.82 (P04C03)

EP 1 669 325 A1

**ANHANG ZUM EUROPÄISCHEN RECHERCHENBERICHT
ÜBER DIE EUROPÄISCHE PATENTANMELDUNG NR.**

EP 04 02 9439

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

20-07-2005

| Im Recherchenbericht angeführtes Patentdokument | Datum der Veröffentlichung | Mitglied(er) der Patentfamilie | Datum der Veröffentlichung |
|---|---|---|---|
| WO 02062724 A | 15-08-2002 | JP 2002308672 A<br>CN 1457329 A<br>EP 1358137 A2<br>WO 02062724 A2<br>US 2003096696 A1 | 23-10-2002<br>19-11-2003<br>05-11-2003<br>15-08-2002<br>22-05-2003 |
| JP 01009819 A | 13-01-1989 | KEINE | |
| JP 1009818 A2 | 13-01-1989 | JP 1009818 A | 13-01-1989 |
| JP 06144835 A | 24-05-1994 | JP 3213730 B2 | 02-10-2001 |

EPO FORM P0461

Für nähere Einzelheiten zu diesem Anhang : siehe Amtsblatt des Europäischen Patentamts, Nr.12/82

11